# EUROPÄISCHE PATENTSCHRIFT

(11) **EP 2 096 084 B1**
(45) Veröffentlichungstag und Bekanntmachung des Hinweises auf die Patenterteilung: **17.08.2016**
(21) Anmeldenummer: 09000467.2
(22) Anmeldetag: 15.01.2009
(51) Int. Cl.: C01G 55/00

(54) **Verfahren und Vorrichtung zum Entfernen von Ruthenium durch Destillation als Ru04 aus ruthenathaltigen Lösungen**
Method and device for removing ruthenium by distillation as Ru04 from ruthenate containing solutions
Procédé et dispositif destinés à enlever du ruthénium par distillation en tant que Ru04 de solutions contenant du ruthénate

(30) Priorität: 30.01.2008 DE 102008006797
(43) Veröffentlichungstag der Anmeldung: 02.09.2009
(73) Patentinhaber: Heraeus Deutschland GmbH & Co. KG, 63450 Hanau (DE)
(72) Erfinder: Meyer, Horst, Dr., 63674 Altenstadt (DE); Grehl, Matthias, Dr., 63773 Goldbach (DE); Alt, Hans-Joachim, 63486 Bruchköbel (DE); Patzelt, Peter, 63743 Aschaffenburg (DE); von Eiff, Hermann, 63543 Neuberg (DE); Zell, Bernd, 63517 Rodenbach (DE)
(74) Vertreter: Heraeus IP

(56) Entgegenhaltungen:
- WO-A-2008/131856
- JP-A- 61 006 130
- JP-A- 2006 161 096

## Beschreibung

Die Erfindung betrifft Verfahren und Vorrichtungen zum Entfernen von Ruthenium durch Destillation als RuO₄ aus ruthenathaltigen Lösungen.

Ruthenium (und gegebenenfalls Osmium) enthaltende Scheidgüter werden zur Gewinnung der Edelmetalle beispielsweise zunächst mit einer alkalischen oxydierenden Schmelze behandelt. Daraus erhält man nach Auslaugen Lösungen, die K₂RuO₄ (und gegebenenfalls K₂OsO₄) enthalten. Die Elemente Ru und Os werden vorteilhaft oxidativ als Tetroxide abgetrennt. Als Oxidationsmittel dafür eignen sich z.B. Sauerstoff/Ozon, H₂O₂/Schwefelsäure, Peroxodisulfat, Brom oder Chlor. Die Tetroxide werden destillativ abgetrennt.

Aus JP61006130A ist bekannt, ruthenathaltige wässrige Lösungen aus der Auslaugung von Alkalischmelzen mit Chlorgas zu sättigen, entstandenes Hypochlorit durch Ansäuern zu zersetzen, RuO₄ abzudestillieren und in HCl aufzunehmen. Es wird eine Ausbeute von 99% im Labormaßstab angegeben.

Für das Freisetzen von RuO₄ wird Chlor verbraucht:

2 K⁺ + RuO₄² + Cl₂ ---> RuO₄ + 2 KCl (I)

Bei der Absorption in HCl wird doppelt soviel Chlor frei:

RuO₄ + 10 HCl ---> H₂RuCl₆ + 2 Cl₂ + 4 H₂O (II)

Wenn im Industriemaßstab ein Oxidationsmittel wie Chlor oder ein Chlor-Luft-Gemisch durch die ruthenathaltige Lösung durchgeleitet wird und als Schlepper für RuO₄ fungiert, wird bei dem Prozess viel Oxidationsmittel verbraucht.

Die Erfindung versucht vor allem, diesem Problem abzuhelfen. Es stellt sich die Aufgabe, ein Verfahren zum Entfernen von Ruthenium durch Destillation als RuO₄ aus ruthenathaltigen Lösungen bereitzustellen, bei dem das Oxidationsmittel bei guter Ausbeute möglichst effizient eingesetzt wird.

Eine weitere Aufgabe ist die Bereitstellung eines automatisierbaren Prozesses.

Die Aufgabe wird durch Verfahren gemäß Anspruch 1 gelöst. Vorteilhafte Ausgestaltungen sind den weiteren Ansprüchen zu entnehmen.

Dabei wird innerhalb einer Destillationsanlage das Oxidationsmittel, z.B. ein Chlor/Luft-Gemisch, im Kreislauf geführt.

Der Reaktor ist vorteilhafterweise beheizbar und kühlbar, so dass die Temperaturführung auch automatisiert zu steuern ist.

Mehrere Destillationsanlagen werden als Module hintereinander geschaltet Das Verfahren wird zweckmäßig so gesteuert, dass, sobald sich in einer Anlage ein Überschuss Oxidationsmittel, z.B. Chlor, entwickelt, deren Gasgemisch in die nächste Anlage gepumpt wird. Auf diese Weise wird im Fall von Chlor als Oxidationsmittel auch beim Prozess erzeugtes Chlor zur Oxidation von Ruthenat genutzt. Bei dieser Fahrweise werden beispielsweise pro kg Ru etwa 1,9 kg Chlor von außen eingeleitet. Infolge der Kreislaufführung gelangen ca. 0,2 kg Chlor pro kg Ru in die Abluftreinigung.

Wenn der pH der alkalischen ruthenathaltigen Lösung vor dem Einleiten des Chlors mit Säure gesenkt wird, ist die Heftigkeit der Reaktion einfacher zu kontrollieren.

Es hat sich als vorteilhaft erwiesen, die Konzentration der Salzsäure, in der RuO₄ aufgenommen wird, durch Einleiten von HCl Gas auf einem hohen Niveau zu halten, zweckmäßig von über 5 mol/l, damit sich in den kein RuO₄ ansammeln kann.

Das Verfahren wird zweckmäßig in einen Prozess zur Gewinnung von Ruthenium aus Scheidgütern integriert. Dabei werden das absorbierte H₂RuCl₆ und die angefallenen Mutterlaugen in dem Fachmann bekannter Weise aufgearbeitet.

Das erfindungsgemäße Verfahren wird anhand des folgenden Beispiels erläutert. Teile und Prozentangaben beziehen sich wie in der übrigen Beschreibung auf das Gewicht, sofern nicht anders angegeben.

### Beispiel

Ein rutheniumhaltiger Schmelzkuchen aus der alkalisch oxidierenden Schmelze wird mit Nichttrinkwasser unter Rühren ausgelaugt. Die erhaltene Kalium/Natrium-Ruthenat-Lösung wird in einen Glaskolben eingespeist und anschließend in einen Vorlagebehälter gepumpt.

Ein 500 l Reaktor mit Gaseinlass, Rührwerk, Gasauslass und daran angeschlossenem 50 l Waschkolben, der mit vier hintereinander geschalteten, mit HCl konz. (erste Vorlage) verdünnter HCl (2. und 3. Vorlage) und Wasser (4. Vorlage) gefüllten Absorbervorlagen verbunden ist, wird mit 50 - 80 l der Kalium/Natrium-Ruthenat-Lösung beschickt und mit Brauchwasser auf 300 l aufgefüllt. Zu der Lösung werden je nach der vorbestimmten Konzentration der Kalium/Natrium-Ruthenat-Lösung 5-10 l HNO₃ konz. techn. zugegeben und die Temperatur auf ca. 50 °C gebracht.

In die Lösung werden über ein Einleitrohr 2,5 m³/h Chlor eingeleitet. Nach Ende des Temperaturanstiegs wird beheizt.

Das am Boden des Destillationskolbens angesammelte flüssige Rutheniumtetroxid wird restlos abdestilliert und in den Vorlagen aufgefangen.

Vor dem Ende der RuO₄-Destillation wird in die erste Vorlage HCl-Gas eingeleitet. RuO₄ reagiert dabei nach Gleichung (II) zu H₂RuCl₆. Mit dem Einleiten wird begonnen, wenn im Destillationskolben eine Temperatur von 80 - 85 °C erreicht ist.

Die Reaktion ist beendet, wenn das Waschwasser im Waschkolben fast farblos wird, im Reaktor eine Temperatur von mind. 98 °C erreicht wurde und am Boden des Waschkolbens kein RuO₄ mehr sichtbar ist.

Der Chlorstrom wird unterbrochen.

Der HCl-Strom in die Vorlagen wird weiter 1-2 h aufrechterhalten.

Der Rückstand im Reaktor wird mit 3-4 l NaOH tech. 45-50% behandelt.

Die erhaltene H₂RuCl₆/RuCl₃-Lösung wird aus den Absorbervorlagen entnommen.

Die Erfindung betrifft auch Vorrichtungen gemäß Anspruch 9 zur Durchführung des beschriebenen Verfahrens.

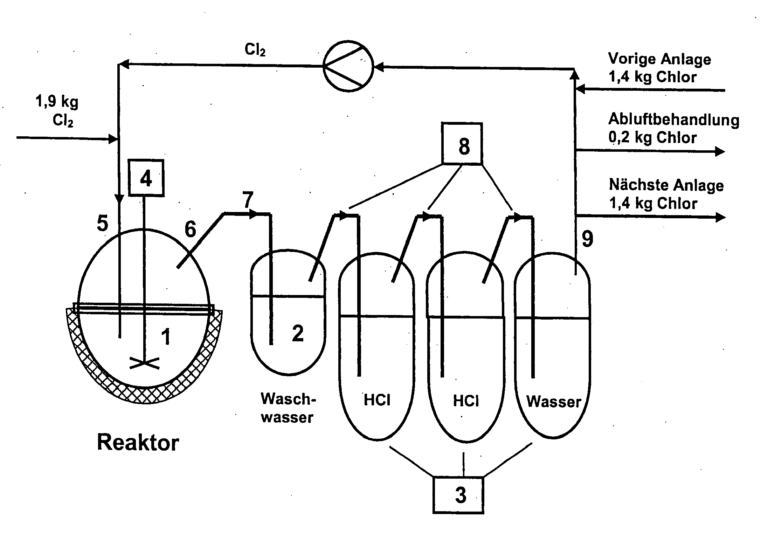

Fig. 1 zeigt ein Modul einer beispielhaften Vorrichtung zur Durchführung des Verfahrens.

Bei dem Modul ist einem Reaktor 1 mit Rührwerk 4, Gaseinlass 5 und Gasauslass 6 ein Waschkolben 2 nachgeschaltet, in dem das abdestillierte Gas/Dampf-Gemisch von etwaigen der Reaktionsmischung entstammenden Salznebeln befreit wird. Vom Auslass des Gaswäschers führt eine Leitung zu einem oder mehreren gegebenenfalls hintereinander geschalteten Absorbern 3. Von dem Modul der Fig. 1 können mehrere hintereinander geschaltet sein und bilden gemeinsam eine Vorrichtung zur Durchführung des erfindungsgemäßen Verfahrens. Durch den Auslass des letzten Absorbers eines Moduls wird das Gas wahlweise in den Reaktor zurück oder in ein weiteres Modul oder in eine Anlage zur Abluftbehandlung geführt. Es versteht sich, dass die Abluftbehandlung erst nach dem letzen Modul der Vorrichtung vorgenommen wird.

Es wird in der beispielhaften Ausgestaltung des Moduls der Fig. 1 dargestellt, dass 1.9 kg Chlor von außen zugeführt werden und 1.4 kg Chlor aus einer vorgeschalteten Anlage kommen. Entsprechend verlassen auch 1.4 kg Chlor dieses Modul, um in einer nachgeschalten Anlage an der Reaktion teilzunehmen.

Es hat sich als zweckmäßig erwiesen, wenn die Dichtung des Rührwerks 4, z. B. eine Gleitringdichtung, mit Chlorgas bespült wird, um Korrosion durch in den Dichtungsraum eindringendes RuO₄ zu vermeiden.

## Patentansprüche

1. Verfahren zum Entfernen von Ruthenium durch Destillation von RuO₄ aus ruthenathaltigen Lösungen mit den Schritten
**I**.Behandlung der ruthenathaltigen Lösung mit einem Oxidationsmittel,
**II**.Abdestillieren des entstandenen RuO₄,
**III**.Aufnehmen des RuO₄ aus Schritt **II** in Salzsäure,
wobei das Oxidationsmittel nach Schritt **III** in Schritt **I** rückgeführt wird, **dadurch gekennzeichnet dass** mehrere Destillationsanlagen als Module hintereinander geschaltet werden und das Verfahren so gesteuert wird, dass, sobald sich in einer Anlage ein Überschuss Oxidationsmittel entwickelt, deren Gasgemisch in die nächste Anlage gepumpt wird.

2. Verfahren nach Anspruch 1, bei dem das Oxidationsmittel nach mindestens einem Kreislauf in mindestens ein weiteres nachgeschaltetes Verfahren mit weiteren Schritten **I** bis **III** geführt wird.

3. Verfahren nach einem der vorstehenden Ansprüche, bei dem das Oxidationsmittel der Gruppe bestehend aus Sauerstoff/Ozon, H₂O₂/Schwefelsäure, Peroxodisulfat, Brom oder Chlor angehört.

4. Verfahren nach einem der vorstehenden Ansprüche, wobei vor Schritt **I** eine Mineralsäure zugesetzt wird.

5. Verfahren nach einem der vorstehenden Ansprüche, bei dem das Oxidationsmittel Brom oder Chlor ist.

6. Verfahren nach den Ansprüchen 2 und 5, bei dem das Gasgemisch nach Schritt **III** dann in das nachgeschaltete Verfahren geführt wird, wenn sich nach Schritt **III** Brom oder Chlor zu entwickeln beginnt,

7. Verfahren nach Anspruch 6, bei dem das Chlorgas vor der Rückführung durch Waschen mit Wasser von HCl-Gas befreit wird.

8. Verfahren nach einem der vorstehenden Ansprüche 5 bis 7, wobei vor Schritt **I** Salzsäure oder/und Salpetersäure zugesetzt wird.

9. Vorrichtung zur Durchführung von Verfahren gemäß einem der vorstehenden Ansprüche, aufweisend mehrere Destillationsanlagen als Module mit mindestens den Bestandteilen:
A. einem Reaktor (1) mit Rührwerk (4), Gaseinlass (5) und Gasauslass (6),
B. mindestens einem mit dem Gasauslass (6) über eine Leitung (7) verbundenen nachgeschalteten Wäscher (2),
C. einem oder mehreren dem mindesten einen Wäscher (2) über Leitungen (8) nachgeschaltete Gasabsorber (3),
E. mindestens eine Leitung (9) vom gegebenenfalls letzten Adsorber
• zur Rückführung in den Gaseinlass des Reaktors (1)
• oder in ein weiteres Modul
• oder in eine Anlage zur Abluftbehandlung.

10. Vorrichtung nach Anspruch 9, wobei sich am Rührwerk (4) ein separater Gaseinlass zum Erzeugen einer Chlor- oder Brom-Gasatmosphäre im Raum um die Dichtung Rührwerks befindet.

## Claims

1. Process for removing ruthenium from ruthenate-containing solutions by distillation of RuO₄, comprising the steps of
**I:** Treating the ruthenate-containing solution with an oxidation agent;
**II:** distilling the RuO₄ thus generated;
**III**. taking up the RuO₄ from step **II** in hydrochloric acid;
whereby the oxidation agent is recycled to step I after step **III, characterised in that** multiple distillation facilities are arranged in sequence as modules and **in that** the process is controlled appropriately such that the gas mixture is pumped into the subsequent facility as soon as an excess of oxidation agent forms in any one of the facilities.

2. Process according to claim 1, in which the oxidation agent, after at least one cycle, is supplied to at least one further downstream process comprising further steps I to III.

3. Process according to any one of the preceding claims, in which the oxidation agent belongs to the group consisting of oxygen / ozone, H202 / sulfuric acid, peroxodisulfate, bromine or chlorine.

4. Process according to any one of the preceding claims, whereby a mineral acid is being added prior to step **I.**

5. Method according to any one of the preceding claims, in which the oxidation agent is bromine or chlorine.

6. Method according to claims 2 and 5, in which the gas mixture, after step **III**, is supplied to the downstream process at that point in time at which bromine or chlorine starts to develop after step **III**.

7. Process according to claim 6, in which HCl gas is removed from the chlorine gas before recycling it by scrubbing with water.

8. Process according to any one of the preceding claims 5 to 7, whereby hydrochloric acid or/and nitric acid is being added prior to step I.

9. Apparatus for performing processes according to any one of the preceding claims, comprising multiple distillation facilities as modules with at least the following components:
A. a reactor (1) with stirrer (4), gas inlet (5), and gas outlet (6);
B. at least one downstream scrubber (2) that is connected to the gas outlet (6) by means of a conduit (7);
C. one or more gas absorbers (3) that are arranged downstream from the at least one scrubber (2) by means of conduits (8);
E. at least one conduit (9) from the, if applicable, last absorber
• for recycling into the gas inlet of the reactor (1)
• or into a further module
• or into a facility for exhaust air treatment.

10. Apparatus according to claim 9, whereby the stirrer (4) has a separate gas inlet situated on it for generating a chlorine gas or bromine gas atmosphere in the space about the gasket of the stirrer.

## Revendications

1. Procédé d'enlèvement de ruthénium par distillation de RuO₄ de solutions contenant du ruthénate, comprenant les étapes suivantes
**I** : traitement de la solution contenant du ruthénate par un agent oxydant,
**II** : enlèvement par distillation du RuO₄ produit,
**III** : réception du RuO₄ de l'étape Il dans de l'acide chlorhydrique,
dans lequel l'agent oxydant est renvoyé à l'étape I après l'étape III, **caractérisé en ce que** plusieurs installations de distillation sont montées l'une derrière l'autre en tant que modules et le procédé est ainsi piloté que dès qu'un excès d'agent oxydant se développe dans une installation, son mélange gazeux est pompé dans l'installation suivante.

2. Procédé selon la revendication 1, dans lequel l'agent oxydant, après au moins un circuit, est dirigé dans au moins un procédé supplémentaire en aval avec des étapes I à III supplémentaires.

3. Procédé selon l'une des revendications précédentes, dans lequel l'agent oxydant appartient au groupe composé d'oxygène / d'ozone /d'H₂O₂ / d'acide sulfurique, de peroxodisulfate, de brome ou de chlore.

4. Procédé selon l'une des revendications précédentes, dans lequel un acide minéral est ajouté avant l'étape I.

5. Procédé selon l'une des revendications précédentes, dans lequel l'agent oxydant est du brome ou du chlore.

6. Procédé selon les revendications 2 et 5, dans lequel le mélange gazeux est dirigé dans le procédé suivant après l'étape III, si après l'étape III, du brome ou du chlore commence à se développer.

7. Procédé selon la revendication 6, dans lequel le gaz de chlore est libéré de gaz HCl par un lavage à l'eau avant le retour.

8. Procédé selon les revendications précédentes 5 à 7, dans lequel de l'acide chlorhydrique et/ou de l'acide nitrique est/sont ajouté(s) avant l'étape I,

9. Dispositif d'exécution de procédés selon l'une des revendications précédentes, présentant plusieurs installations de distillation en tant que modules comprenant au moins l'une des composantes suivantes :
A. un réacteur (1) avec mélangeur (4), une entrée de gaz (5) et une sortie de gaz (6),
B. au moins un laveur (2) monté en aval relié à la sortie de gaz (6) par une conduite (7),
C. un ou plusieurs absorbeur(s) de gaz (3) monté(s) en aval de l'au moins un laveur (2) par des conduites (8),
D. au moins une conduite (9) du dernier absorbeur le cas échéant
• pour le retour de l'entrée de gaz du réacteur (1)
• ou dans un module supplémentaire
• ou dans une installations pour le traitement de l'air pollué.

10. Dispositif selon la revendication 9, dans lequel une entrée de gaz séparée pour produire une atmosphère de gaz de chlore ou de gaz de brome se trouve sur le mélangeur (4) dans l'espace autour du joint du mélangeur.
